# EUROPEAN PATENT APPLICATION

(11) **EP 4 461 557 A1**
(43) Date of publication of application: **13.11.2024**
(21) Application number: 23737311.3
(22) Date of filing: 06.01.2023
(51) Int. Cl.: B43K 7/02

(54) **WRITING INSTRUMENT REFILL AND METHOD FOR MARKING WRITING INSTRUMENT REFILL**

(30) Priority: 06.01.2022 JP 2022000986; 23.03.2022 JP 2022047019; 15.11.2022 JP 2022182286
(71) Applicant: Mitsubishi Pencil Company, Limited, Tokyo 140-8537 (JP)
(72) Inventor: ONODERA, Yutaka, Tokyo 140-8537 (JP); NAKASHIMA, Atsushi, Tokyo 140-8537 (JP)
(74) Representative: Vossius & Partner Patentanwälte Rechtsanwälte mbB
(86) International application number: PCT/JP2023/000175
(87) International publication number: WO 2023/132363

(57) **Abstract**

A writing implement refill includes: an ink storage tube made of a synthetic resin, an inside of the ink storage tube being visible; and an engraved mark, on a surface of the ink storage tube, formed by the synthetic resin being foamed or carbonized or both.

## Description

### Technical Field

The present invention relates to a writing implement refill in which an engraved mark is applied to an ink storage tube, and a method of engraving the writing implement refill.

### Background Art

Japanese Patent Application Laid-Open (JP-A) No. 2008-273096 discloses a technique of performing laser engraving on a surface of a metal or resin tubular body for a writing implement refill using a laser marking device. JP-A No. 2010-155426 discloses a technique of engraving identification information on a surface of a ballpoint pen tip by laser processing.

### SUMMARY OF INVENTION

### Technical Problem

In a case in which physical engraving is performed on a surface of an ink storage tube made of a synthetic resin, an engraved mark is sometimes difficult to see in a state in which an ink is contained therein. An object of an embodiment of the present application is to provide a writing implement refill with an engraved mark having favorable visibility in both a state in which an ink is contained in an ink storage tube and a state in which the ink is not contained in the ink storage tube.

### Solution to Problem

In view of the above problems, a writing implement refill according to a first embodiment of the present application includes: an ink storage tube made of a synthetic resin, an inside of the ink storage tube being visible; and an engraved mark formed, on a surface of the ink storage tube, by the synthetic resin being foamed or carbonized or both.

In a second embodiment of the present application, in addition to the configuration of the first embodiment, it is preferable that a reactive additive is blended in the synthetic resin. When the reactive additive absorbs laser light to generate heat, the synthetic resin is foamed, carbonized, or foamed and carbonized, so that an engraved mark with favorable visibility is applied to the writing implement refill.

Moreover, in a third embodiment of the present application, in addition to the configuration of the first embodiment or the second embodiment, it is preferable that the engraved mark protrudes from the surface of the ink storage tube from the viewpoint of visibility and durability of the engraved mark.

Furthermore, in a fourth embodiment of the present application, in addition to the configuration of any one of the first to third embodiments, a color of an ink contained in the ink storage tube is visible from outside, and in addition to the engraved mark, an information identifier of a color of an identical tone to the color of the ink is formed on the surface of the ink storage tube. Here, the "color of an identical tone" refers to a color that makes it difficult to visually recognize the engraved mark since the engraved mark is indistinguishable from the ink in a state in which the portion of the engraved mark is filled with the ink. The "information identifier" refers to, for example, a two-dimensional code such as a barcode or a QR code (registered trademark).

Furthermore, it is preferable that the ink storage tube has a multilayer structure of two or more layers including an outermost layer and at least one inner layer located inside the outermost layer, and the reactive additive is blended only in the inner layer. In other words, it is preferable that the reactive additive is not blended in the outermost layer.

The engraved mark can be formed by applying laser marking to the surface of the ink storage tube.

### Advantageous Effects of Invention

Since the embodiment of the present application is configured as described above, an engraved mark having favorable visibility can be applied to a writing implement refill in both a state in which an ink is contained in an ink storage tube and a state in which the ink is not contained in the ink storage tube.

### BRIEF DESCRIPTION OF DRAWINGS

Fig. 1 schematically illustrates the appearance of a writing implement refill according to a first embodiment of the present disclosure.
Fig. 2 schematically illustrates the appearance of a writing implement refill according to a comparative embodiment.
Fig. 3A schematically illustrates the appearance of a writing implement refill according to a second embodiment of the disclosure.
Fig. 3B schematically illustrates the appearance of the writing implement refill according to the second embodiment of the disclosure.
Fig. 4A schematically illustrates a writing implement refill according to a third embodiment of the disclosure in a cross section corresponding to A-A in Fig. 3A.
Fig. 4B schematically illustrates the writing implement refill according to the third embodiment of the disclosure in a cross section taken along line B-B in Fig. 4A.
Fig. 4C schematically illustrates the cross section of the writing implement refill according to the first embodiment and the second embodiment of the disclosure in a cross section taken along line A-A of Fig. 3A.
Fig. 4D schematically illustrates the cross section of the writing implement refill according to the first embodiment and the second embodiment of the disclosure in a cross section taken along line C-C in Fig. 4C.

### DESCRIPTION OF EMBODIMENTS

Hereinafter, embodiments of the disclosure will be described with reference to the drawings. Note that, in the following description, a "leading end" refers to a side on which a writing leading end (for example, a writing ball) is provided in a writing implement refill, and a "trailing end" refers to the opposite side thereof. Moreover, the same reference numerals in the drawings indicate the same members or parts without any particular reference in the following description of the drawings. In each drawing, the left side of the drawing is a leading end side, and the right side is a trailing end side.

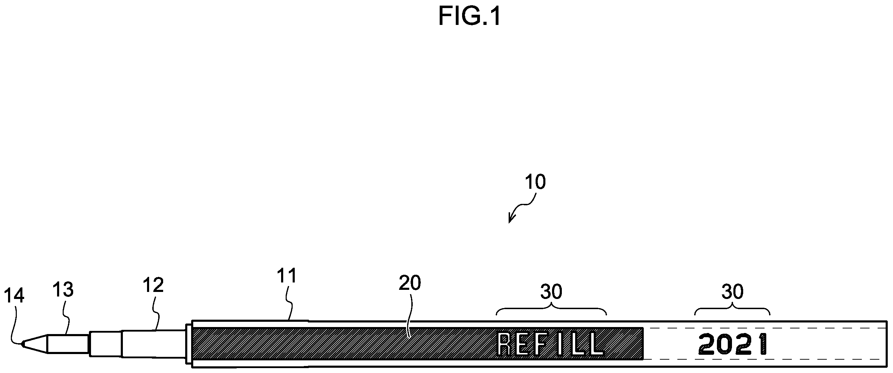

Fig. 1 schematically illustrates the appearance of a writing implement refill 10 according to a first embodiment of the disclosure. The writing implement refill 10 of the present embodiment includes a cylindrical ink storage tube 11 that stores an ink 20 therein, a joint 12 attached to the leading end of the ink storage tube 11, and a ballpoint pen tip 13 attached to the leading end of the joint 12 and holding a writing ball 14 at the leading end.

The ink storage tube 11 is made of a synthetic resin and an inside of the ink storage tube 11 is visible. Examples of the synthetic resin include a polypropylene resin. Moreover, an engraved mark 30 is formed, on a surface of the ink storage tube 11, by the synthetic resin being foamed or carbonized or both. A reactive additive is blended in the synthetic resin. The engraved mark 30 is formed by applying laser marking to the surface of the ink storage tube 11, and protrudes from the surface of the ink storage tube 11.

Here, although, in a case in which laser marking is performed on an ink storage tube formed of a light transmissive synthetic resin material, an engraved mark can be formed with a CO₂ laser marker having a wavelength of 10,600 nm, the engraved mark is not carbonized or foamed, only irregularities are formed, and sufficient visibility cannot be obtained. Meanwhile, since the wavelength of a fiber laser marker having a wavelength of about 1,000 nm is not the energy absorption band of the synthetic resin material, a laser beam is transmitted through the light transmissive synthetic resin material, and thus the engraved mark cannot be formed. Therefore, by blending a reactive additive in the synthetic resin material, it is possible to form an engraved mark such as character information even with laser light in a wavelength range that is not the energy absorption band of the synthetic resin material. That is, usually, the synthetic resin material itself does not react with laser light having a wavelength of from 800 to 1,500 nm, but this reactive additive absorbs the energy of the laser light and is excited, so that the synthetic resin can be discolored. The engraved mark 30 such as character information convexly protrudes due to foaming, carbonization, or both the foaming and the carbonization. Therefore, the visibility of the engraved mark 30 is more favorable than that of a mechanical engraved mark in which character information or the like is recessed with respect to the surface. For example, in a case in which a polypropylene resin is used as a synthetic resin and laser marking is performed with a fiber laser marker, the wavelength of the laser light is preferably from 1,000 to 1,100 nm.

Examples of the reactive additive include a mixture of copper oxide and molybdenum oxide, a mixture of bismuth oxide and gallium oxide, a mixture of bismuth oxide, gallium oxide, and neodymium oxide, a pigment in which a thin flaky substrate of mica is coated with tin oxide doped with antimony, arsenic, bismuth, copper, gallium, germanium, or any oxide thereof, and a polymer substance to which copper hydroxide monophosphate or molybdenum oxide is added. As the reactive additive, only one of these may be used, or two or more thereof may be used in combination.

The content of the reactive additive is preferably in a range of from 0.01 to 10 mass% with respect to the amount of the synthetic resin. When the content of the reactive additive is 0.01 mass% or more, foaming, carbonization, or both of them in the ink storage tube are favorably generated. When the content of the reactive additive is 10 mass% or less, the transparency of the ink storage tube 11 is secured, and the remaining amount and color of the ink 20 in the ink storage tube 11 can be visually recognized.

In the synthetic resin, the reactive additive absorbs the energy of the laser light and generates heat to foam the periphery, so that the portion becomes the engraved mark 30 having a white color. Moreover, in the synthetic resin, the reactive additive absorbs the energy of the laser light and generates heat to carbonize the periphery, so that the portion becomes the engraved mark 30 having a black color. Furthermore, since foaming and carbonization occur at the same time, the engraved mark 30 appears white or black depending on the background color. Note that the surface portion of the ink storage tube 11 is mainly foamed, so that the engraved mark 30 has a white color, and the engraved mark 30 has a black color due to the presence of carbide inside the synthetic resin.

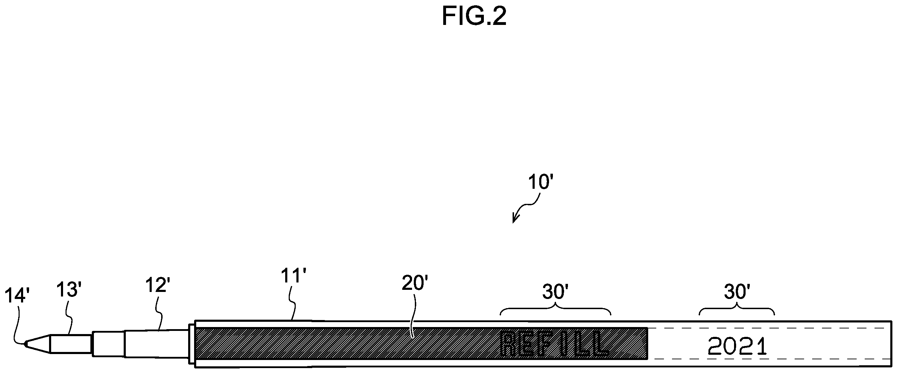

Here, a writing implement refill 10' of a comparative embodiment illustrated in Fig. 2 is common in that it includes an ink storage tube 11' that stores an ink 20', a joint 12', and a ballpoint pen tip 13' that holds a writing ball 14' as in Fig. 1, but is different in that an engraved mark 30' is mechanically made by thermal engraving. That is, the engraved mark 30' is microscopically merely a groove formed on the surface of the ink storage tube 11'. For this reason, it is difficult to provide a contrast between the character and its periphery, and it is difficult to visually recognize the character.

On the other hand, in the writing implement refill of Fig. 1 illustrating the first embodiment, the reactive additive absorbs the energy of the laser light, and the surrounding synthetic resin is foamed and carbonized, so that the engraved mark 30 has both a white color and a black color. Thus, the visibility is good even in a state in which the ink 20 is present or not present in the ink storage tube 11. That is, since the white color is superior at a portion where the ink 20 on the leading end side is present, the visibility of "REFILL" that is the character of the engraved mark 30 is secured. On the other hand, since the black color is superior in a portion without the ink 20 on the trailing end side, the visibility of "2021", that is the character of the engraved mark 30, is secured.

In the first embodiment, since the synthetic resin itself forming the ink storage tube 11 is foamed and carbonized for printing, printing is less likely to disappear due to abrasion or the like than inkjet printing or hot stamping on the surface of the ink storage tube 11.

Note that the engraved mark 30 may be formed only by the foaming of a synthetic resin, or may be formed only by the carbonization of the synthetic resin.

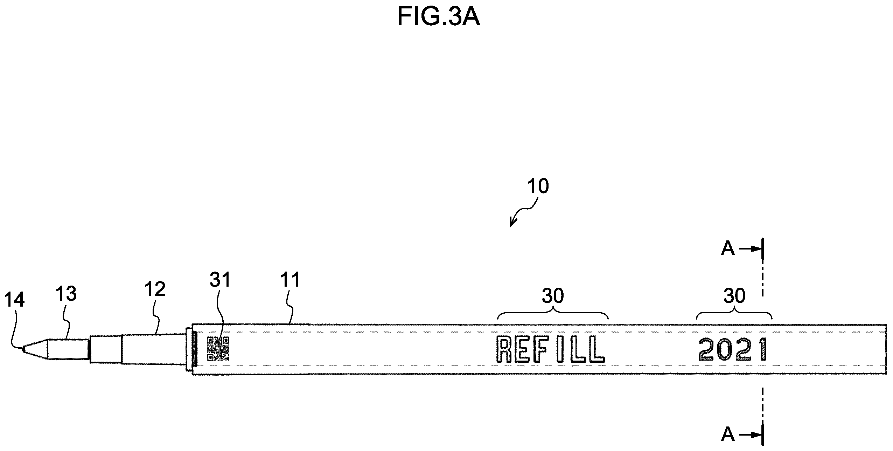

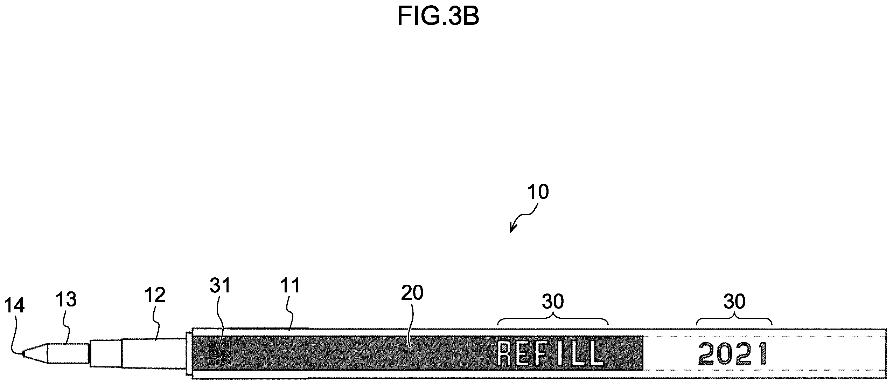

Fig. 3A schematically illustrates the appearance of a writing implement refill 10 according to a second embodiment of the disclosure in a state of not being filled with the ink 20, and Fig. 3B schematically illustrates the appearance of the writing implement refill 10 according to the second embodiment of the disclosure in a state of being filled with the ink 20. The material and shape of the writing implement refill 10, a joint 12, and a ballpoint pen tip 13 including a writing ball 14 are as described in the first embodiment. Also in the embodiment, the characters "REFILL" and "2021" as an engraved mark 30 are formed on the surface of the ink storage tube 11 as in the first embodiment.

Then, in the writing implement refill 10 of the second embodiment, a two-dimensional code is formed as an information identifier 31 in the vicinity of the leading end of the surface of the ink storage tube 11 in addition to the engraved mark 30. The information identifier 31 is printed (for example, formed by printing) in the same color as that of the ink 20 stored in the ink storage tube 11. Therefore, as shown in Fig. 3B, since the color of the ink 20 contained in the ink storage tube 11 is visible from outside in a state in which the ink storage tube 11 is filled with the ink 20, the engraved mark is indistinguishable from the ink 20 and is difficult to visually recognize. Here, within a range of similar colors, for example, a color difference (ΔE*ab) between two colors of the ink 20 and the information identifier 31 through the ink storage tube 11 may be less than 1.6.

Note that, in a case in which the ink 20 has a black color, for example, the information identifier 31 may be formed as the engraved mark 30 obtained by carbonizing the surface of the ink storage tube 11 by laser marking. Since the laser marking can provide fine printing, a fine pattern such as a two-dimensional code can be clearly printed even on a thin object such as the writing implement refill 10. Moreover, it is easy to change the two-dimensional code as the information identifier 31 in each of the writing implement refill 10, and thus, it is also possible to identify the individual writing implement refill 10.

By printing the information identifier 31 on the writing implement refill 10 in this manner, various types of information can be given to the writing implement refill 10. For example, a web page in which the product information of the writing implement refill 10 is disclosed can be linked to the two-dimensional code, or a so-called e-commerce site can be linked to the two-dimensional code, which can lead to product sales promotion.

Moreover, as illustrated in Fig. 3B, when the writing implement refill 10 is started to be used, the color of the information identifier 31 and the color of the contained ink 20 are of an identical tone, so that the information identifier 31 cannot be read as the two-dimensional code. However, when the ink 20 is consumed, the background of the information identifier 31 becomes a different tone as illustrated in Fig. 3A, and the information identifier 31 can be read as the two-dimensional code. By using this, for example, a service of providing some sort of benefit information (for example, a purchase discount ticket or various points) to a consumer who has used up the ink 20 of the writing implement refill 10 is also possible.

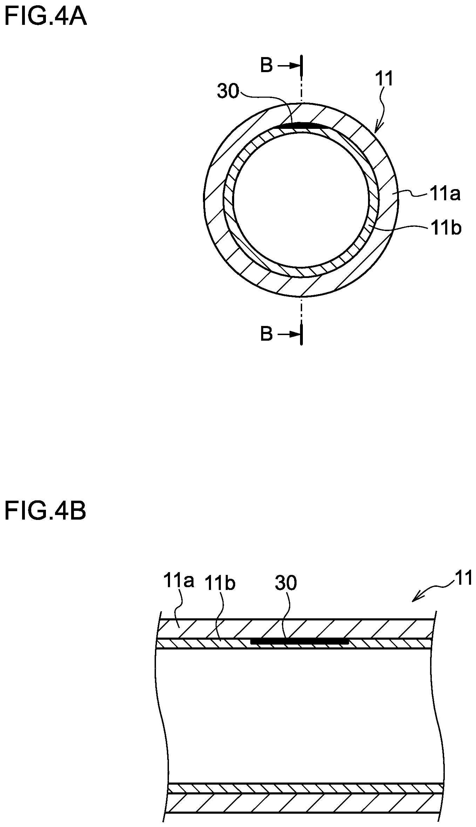

Figs. 4A and 4B are cross-sectional views of an ink storage tube 11 of a writing implement refill 10 according to a third embodiment of the disclosure. The appearance of the writing implement refill 10 of the embodiment is similar to that of the second embodiment shown in Fig. 3A. Fig. 4A schematically illustrates a cross section corresponding to an A-A cross section of Fig. 3A, and Fig. 4B schematically illustrates a B-B cross section of Fig. 4A. The ink storage tube 11 has a multilayer structure of two or more layers, and includes an outermost layer 11a and at least one inner layer 11b (one in the embodiment) located inside the outermost layer 11a. A reactive additive is blended in the inner layer 11b and can develop color by laser marking, but the reactive additive is not blended in the outermost layer 11a. Since the ink storage tube 11 has such a multilayer structure, as shown in Figs. 4A and 4B, the engraved mark 30 generated by the color development by the laser marking is formed between the outermost layer 11a and the inner layer 11b. The ink storage tube 11 having such a multilayer structure can be formed by extrusion molding or injection molding.

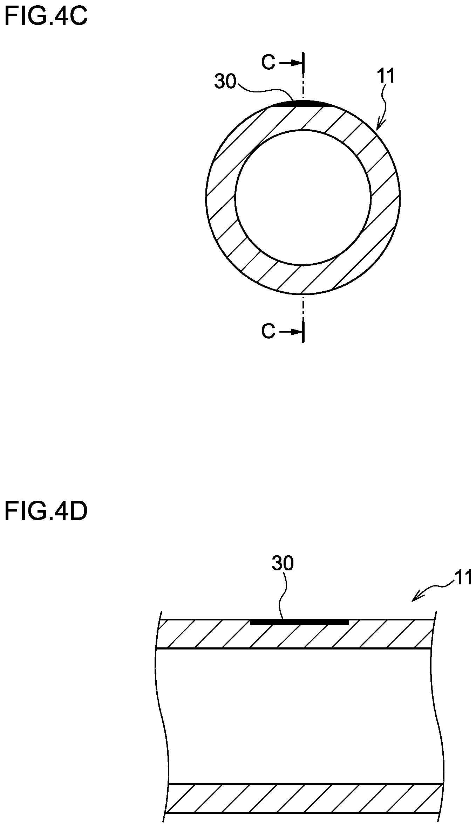

Here, the cross-sectional views of the ink storage tubes 11 of the writing implement refills 10 of the first embodiment and the second embodiment are shown in Figs. 4C and 4D. Fig. 4C schematically illustrates an A-A cross section of Fig. 3A, and Fig. 4D schematically illustrates a C-C cross section of Fig. 4C. Since the engraved mark 30 is formed on the surface of the ink storage tube 11 in the writing implement refills 10 of the first embodiment and the second embodiment, the engraved mark may disappear due to abrasion or the like, or the surface may be roughened due to the printing of the processing condition, so that a smooth state is not maintained in some cases.

On the other hand, since the engraved mark 30 is formed between the outermost layer 11a and the inner layer 11b as described above, in the writing implement refill 10 according to the third embodiment, the engraved mark 30 does not disappear due to the abrasion or the like of the surface of the ink storage tube 11. Moreover, since the engraved mark 30 is smooth without being formed on the surface of the ink storage tube 11, the ink storage tube 11 does not interfere with the inner peripheral surface of the axial barrel of a ballpoint pen when being stored inside the axial barrel, and does not interfere with back and forth movement inside the axial barrel due to a process of assembling the ballpoint pen, and a clicking operation and the like.

### INDUSTRIAL APPLICABILITY

The invention is applicable to a writing implement refill such as a ballpoint pen refill, a marker refill, or a felt pen refill.

## Claims

1. A writing implement refill, comprising:
an ink storage tube made of a synthetic resin, an inside of the ink storage tube being visible; and
an engraved mark formed, on a surface of the ink storage tube, by the synthetic resin being foamed or carbonized or both.

2. The writing implement refill according to claim 1, wherein a reactive additive is blended in the synthetic resin.

3. The writing implement refill according to claim 1, wherein the engraved mark protrudes from the surface of the ink storage tube.

4. The writing implement refill according to claim 1, wherein:
a color of an ink contained in the ink storage tube is visible from outside, and
in addition to the engraved mark, an information identifier of a color of an identical tone to the color of the ink is formed on the surface of the ink storage tube.

5. The writing implement refill according to claim 2, wherein:
the ink storage tube has a multilayer structure of two or more layers including an outermost layer and at least one inner layer located inside the outermost layer, and
the reactive additive is blended only in the inner layer.

6. A method of engraving a writing implement refill according to any one of claims 1 to 5, the method comprising forming the engraved mark by applying laser marking to the surface of the ink storage tube.
